# EUROPÄISCHE PATENTSCHRIFT

(11) **EP 2 974 827 B1**
(45) Veröffentlichungstag und Bekanntmachung des Hinweises auf die Patenterteilung: **25.01.2017**
(21) Anmeldenummer: 14002470.4
(22) Anmeldetag: 17.07.2014
(51) Int. Cl.: B24B 17/10, B24B 21/16, B24B 49/16, B25J 9/16

(54) **Verfahren zum Betreiben einer Bandschleifvorrichtung**
Method for operating a belt-sanding device
Procédé de fonctionnement d'un dispositif de surfaçage

(43) Veröffentlichungstag der Anmeldung: 20.01.2016
(73) Patentinhaber: Franke Water Systems AG, 5726 Unterkulm (CH)
(72) Erfinder: Edelmann, Max, D-79650 Schopfheim (DE); Anderegg, Roland, CH-4600 Otten (CH); Adam, Andreas, CH-5707 Seengen (CH)
(74) Vertreter: Lemcke, Brommer & Partner Patentanwälte Partnerschaft mbB

(56) Entgegenhaltungen:
- EP-A1- 0 477 737
- DE-A1- 4 226 708
- DE-A1- 4 241 293
- DE-A1- 10 013 340
- DE-A1- 19 825 698
- DE-A1-102010 047 510
- US-A- 5 441 437
- US-A1- 2007 049 171
- Roland Anderegg ET AL: "Athens Institute for Education and Research ATINER ATINER's Conference Paper Series IND2013-0818 Non-Linear Control of Robot aided Belt Grinding Manufacturing Processes", , 23. Januar 2014 (2014-01-23), Seiten 1-20, XP055144795, Gefunden im Internet: URL:http://www.atiner.gr/papers/IND2013-08 18.pdf [gefunden am 2014-10-07]

## Beschreibung

Die vorliegende Erfindung betrifft ein Verfahren zum Betreiben einer Band-schleifvorrichtung gemäß Anspruch 1.

Das Dokument DE 10 2010 047 510 A1 offenbart eine Bandschleifmaschine zum Massschleifen mit einem Arbeitskopf, welcher über eine Aufhängung geradlinig verfahrbar, schwenkbar um eine erste Schwenkachse und schwenkbar um eine zu dieser senkrecht verlaufenden zweiten Schwenkachse an einem Maschinenrahmen gehaltert ist. Am Arbeitskopf ist eine Rollenanordnung zum Antreiben eines geschlossenen Schleifbandes vorgesehen, wobei eine Kontaktrolle der Rollenanordnung zur Anlage an ein Werkstück vorgesehen und um eine Nulllage entlang der ersten Schwenkachse verschiebbar ist. Weiter ist die Kontaktrolle derart gehaltert, dass der Kontaktflächenbereich, in dem die Kontaktrolle zur Anlage an das Werkstück kommt, von der ersten und der zweiten Schwenkachse geschnitten wird, wenn die Kontaktrolle in der Nulllage ist. Dadurch soll erreicht werden, dass die Schwenkachsen derart zueinander angeordnet sind, dass eine Bewegung des Kontaktflächenbereichs um eine der Schwenkachsen nicht mit einer translatorischen Bewegung gekoppelt ist.

Weitere Bandschleifmaschinen sind beispielsweise aus den Dokumenten DE 42 26 708 A1 und DE 100 13 340 A1 bekannt.

Weiterhin wird im Artikel "Non-Linear Control of Robot aided Belt Grinding Manufacturing Processes" von R. Anderegg et al. - Athens Institute for Education and Research ATINER ATINER's Conference Paper Series IND2013-0818 - die Modellierung einer Bandschleifvorrichtung mit einer Bandschleifmaschine und einem als Industrieroboter ausgebildeten Handhabungsgerät zum Bewegen eines zu schleifenden Werkstücks beschrieben.

Im Artikel "Modeling and Control of Robot Aided Belt Grinding Manufacturing Processes" von R. Anderegg und M. Edelmann - International Conference on Innovative Technologies, IN-TECH 2013, Budapest - wird die Modellierung einer Bandschleifvorrichtung mit einer Bandschleifmaschine und einem als Industrieroboter ausgebildeten Handhabungsgerät zum Bewegen des zu schleifenden Werkstücks beschrieben.

Beim Bandschleifen von Werkstücken, insbesondere von solchen die durch Freiformgeometrien beschreibbar sind, können bei Verwendung von programmgesteuerten Handhabungsgeräten wie Industrierobotern, welche das Werkstück führen, eine ungenaue Ausgangsgeometrie des Werkstücks, Positionsfehler der Bandschleifmaschine oder des Handhabungsgeräts sowie Ungenauigkeiten beim Einspannen des Werkstücks das Ergebnis der Bearbeitung negativ beeinflussen. Insbesondere bei Serienfertigungen unterliegen die Werkstücke Toleranzen. Oftmals ist der Bandschleifprozess die letzte spanende Bearbeitung und bestimmt damit die geometrischen Eigenschaften des fertigen Produkts.

Programmgesteuerte Handhabungsgeräte erlauben in der Regel nur geringe Toleranzen der Werkstücke ohne dass Mängel am Ergebnis des Bandschleifens auftreten.

Handhabungsgeräte, insbesondere Industrieroboter, weisen eine stellungsabhängig stark variierende Nachgiebigkeit auf und infolge der beim Bandschleifen auftretenden Prozesse ist die Sollposition des Endeffektors beziehungsweise des zu bearbeitenden Werkstücks nicht mehr absolut einhaltbar. Oft werden deshalb relativ der zu bewegenden Nutzlast überdimensionierte Handhabungsgeräte, insbesondere Industrieroboter, eingesetzt.

Es ist deshalb eine Aufgabe der vorliegenden Erfindung ein Verfahren zum Betreiben einer Bandschleifvorrichtung zu schaffen, welches eine Serienfertigung von Werkstücken unter Einhaltung der Toleranzen ermöglicht.

Diese Aufgabe wird mit einem Verfahren gemäss Anspruch 1 gelöst.

Eine Bandschleifvorrichtung, welche mit dem erfindungsgemässen Verfahren betrieben wird, weist eine Bandschleifmaschine und ein programmgesteuertes Handhabungsgerät für zu schleifende Werkstücke auf.

Ein in sich geschlossenes Schleifband der Bandschleifmaschine ist um eine Antriebsrolle und um eine Kontaktrolle geführt und kann weiter um eine Spannrolle sowie eine Umlenkrolle geführt sein.

Das programmgesteuerte Handhabungsgerät weist einen Endeffektor auf, mit welchem es das jeweils zu schleifende Werkstück hält. Das Werkstück wird mittels des Handhabungsgeräts entlang einer vorbestimmten programmierten Bewegungsbahn bewegt um es zum Schleifen der verschiedenen Schleifabschnitte an das Schleifband in der gewünschten Lage und mit der gewünschten Bewegung in Anlage zu bringen beziehungsweise zu halten.

Weiter weist die Bandschleifvorrichtung ein vorzugweise der Bandschleifmaschine zugeordnetes Kraftmessorgan zum Ermitteln der Kraft, mit welcher das Werkstück am Schleifband anliegt, und einen ebenfalls vorzugsweise der Bandschleifmaschine zugeordneten Stellantrieb zum Bewegen der Kontaktrolle und des Endeffektors beziehungsweise des von diesem gehaltenen Werkstücks in Richtung aufeinander zu und voneinander weg, auf. Weiter ist ein ebenfalls vorzugsweise der Bandschleifmaschine zugeordneter Positionssensor vorhanden, welcher die Position des Stellantriebs erfasst.

Das Kraftmessorgan ist vorzugsweise durch einen Kraftsensor verwirklicht. Es ist jedoch auch möglich, dass es durch ein Strommesselement gebildet ist, welches den Stromaufnahme des Stellantriebs oder des Motors zum Antreiben des Schleifbandes misst. Es ist auch denkbar, Spannungen in der mechanischen Struktur, beispielsweise mittels Dehnmessstreifen (DMS) zu messen, welche das Kraftmessorgan bilden.

Nach erfolgter Programmierung der Bewegungsbahn wird ein Probe-Werkstück geschliffen, indem das Handhabungsgerät das Probe-Werkstück entlang der programmierten Bewegungsbahn bewegt, und dabei werden kontinuierlich mittels des Kraftsensors und des Positionssensors die Kraft beziehungsweise die Position des Stellantriebs erfasst und die entsprechenden Daten gespeichert.

Dabei ist der Stellantrieb vorzugsweise derart gesteuert, dass er zurückdrängbar ist in Abhängigkeit von der Kraft, mit welcher das Probe-Werkstück gegen das Schleifband mittels des Handhabungsgeräts gedrückt wird. Die Kraft/Weg-Charakteristik kann dabei durch entsprechende Ansteuerung des Stellantriebs beispielsweise linear entsprechend einer Federcharakteristik, gewählt werden. Es ist jedoch auch denkbar, dem Stellantrieb in dieser Phase eine andere Charakteristik zu Grunde zu legen.

Aus den Daten werden die Berührungs-Abschnitte der Bewegungsbahn ermittelt, in welchen das Probe-Werkstück am Schleifband anliegt und es geschliffen wird. Desgleichen werden die Berührungsfrei-Abschnitte der Bewegungsbahn bestimmt, in denen das Probe-Werkstück vom Schleifband entfernt ist und somit kein spanendes Schleifen des Probe-Werkstücks stattfindet.

In den Berührungs-Abschnitten ist die mittels des Kraftmessorgans gemessene Kraft grösser als in den Berührungsfrei-Abschnitten und in den Berührungs-Abschnitten ist der Stellantrieb zurückgedrängt, in Berührungsfrei-Abschnitten jedoch nicht, was mittels des Positionssensors feststellbar ist. Aus den Messsignalen des Kraftmessorgans und des Positionssensors lassen sich somit auf einfache Art und Weise die Berührungs- und Berührungsfrei-Abschnitte bestimmen.

Beim dem Schleifen des Probe-Werkstücks nachfolgenden Schleifen von Werkstücken - beispielsweise in der Serienfertigung -, welche mittels des Handhabungsgeräts entlang der gleichen programmierten Bewegungsbahn geführt werden wie das Probe-Werkstück, erfolgt mittels eines Reglers mit den gespeicherten Daten als Führungsgrösse sowie in den Berührungs-Abschnitten mit dem Messsignal des Kraftmessorgans als Ist-Grösse eine kraftabhängige und in den Berührungsfrei-Abschnitten mit dem Messsignal des Positionssensors als Ist-Grösse eine positionsabhängige Regelung des Stellantriebs.

Die Planung und Programmierung der Bewegungsbahn kann Software unterstützt durch Offlinesimulation und/oder online an der Bandschleifvorrichtung durch eine Fachperson iterativ erfolgen.

Da das programmgesteuerte Handhabungsgerät eine programmierte Bewegungsbahn auch zeitlich immer identisch durchläuft, werden bevorzugt aus den ermittelten und gespeicherten Daten die den Berührung-Abschnitten entsprechenden Berührungs-Zeitabschnitte sowie die den Berührungsfrei-Abschnitten entsprechenden Berührungsfrei-Zeitabschnitte bestimmt.

Somit werden für jeden Berührungs-Abschnitt und für jeden Berührungslos-Abschnitt die Anfangszeit und die Endzeit bestimmt und gespeichert.

Durch eine äusserst einfache Zeit-Synchronisation zwischen dem Handhabungsgerät und dem Kontroller lässt sich dadurch der Stellantrieb zum Schleifen der Werkstücke zeitabhängig entsprechend der Berührungs-Zeitabschnitte und Berührungsfrei-Zeitabschnitte kraft- beziehungsweise positionsabhängig regeln.

Bevorzugt werden die statische und die dynamische Systemsteifigkeit des Handhabungsgeräts in den verschiedenen Berührungs-Abschnitten beziehungsweise den entsprechenden Berührungs-Zeitabschnitten ermittelt, aufgrund welcher eine Modellidentifikation durchgeführt werden kann. Ein geeignetes Modell dazu ist im Fachartikel "Modelling and Control of Robot aided Belt Grinding Manufacturing Processes" von R. Anderegg und M. Edelmann, International Conference on Innovative Technologies, IN-TECH 2013, Budapest, beschrieben. Die Offenbarung dieses Fachartikels gelte durch Bezugnahme in die vorliegende Offenbarung aufgenommen. Diese Systemidentifikation erlaubt optimale Parameter des Reglers zu ermitteln und zwar für jeden Schleifabschnitt.

Bevorzugt werden diese Regelparameter gespeichert und zwar zugeordnet den beim Schleifen des Muster-Werkstücks kontinuierlich erfassten Kraft- und Positionsdaten in den Berührungs-Abschnitten beziehungsweise Berührungs-Zeitabschnitten. Bevorzugt erfolgt dies auch für die Berührungsfrei-Abschnitte beziehungsweise die Berührungsfrei-Zeitabschnitte. Dies kann unter den Begriff "Prozessvorsteuerung" subsummiert werden.

Die unterschiedliche Nachgiebigkeit beziehungsweise Steifigkeit des Handhabungsgeräts bei seinen unterschiedlichen Stellungen lässt sich dadurch berücksichtigen, was zu besonders zuverlässig guten Ergebnissen des Schleifprozesses führt.

Bevorzugt ist die Kontaktrolle mittels des Stellantriebs entlang einer Bahn bewegbar und wird mittels des Kraftmessorgans, bevorzugt eines Kraftsensors, die von der Kontaktrolle auf den Stellantrieb beziehungsweise vom Stellantrieb auf die Kontaktrolle ausgeübte Kraft erfasst. Dies führt zu einem besonders einfachen und zuverlässig Arbeiten der Bandschleifmaschine und der gesamten Bandschleifvorrichtung.

Die Bahn der Bewegung der Kontaktrolle kann linear sein oder auch gekrümmt, beispielsweise entsprechend einem Kreisbogenabschnitt.

Selbstverständlich ist es auch denkbar, den Stellantrieb und/oder den Kraftsensor und/oder den Positionssensor handhabungsgeräteseitig vorzusehen.

Das Handhabungsgerät, welches vorzugsweise durch einen Industrieroboter gebildet ist, wird vorzugsweise mittels einer programmierbaren Gerätesteuerung gesteuert, derart dass das Probe-Werkstück und nachfolgend die Werkstücke entlang der geplanten programmierten Bewegungsbahn zum Schleifen bewegt werden.

Dem Stellantrieb und somit bevorzugt der Bandschleifmaschine ist ein programmierbarer Kontroller, beispielsweise eine speicherprogrammierbare Steuerung, zugeordnet, welcher einerseits den Regler bildet beziehungsweise als solchen programmiert ist und andererseits die von Positionssensor und Kraftmessorgan ermittelten Daten speichert.

Bevorzugt sind mittels des Kontrollers auch die Berührungs- und Berührungsfrei-Abschnitte sowie gegebenenfalls die Berührungs- und Berührungsfrei-Zeitabschnitte sowie die Regelparameter ermittelbar und in diesem speicherbar.

Die Gerätesteuerung gibt an den Kontroller Synchronisationssignale ab, sodass die Daten des Positionssensors und des Kraftmessorgans synchron mit der Bewegung des Handhabungsgeräts beim Schleifen des Probe-Werkstücks gespeichert werden können, und damit beim Schleifen der Werkstücke für jeden Berührungs-Abschnitt beziehungsweise Berührungs-Zeitabschnitt und Berührungsfrei-Abschnitt beziehungsweise Berührungsfrei-Zeitabschnitt die entsprechenden Daten und Regelparameter aus dem Speicher ausgelesen und zur Regelung des Stellantriebs verwendet werden können.

Bevorzugt weist der Regler eine klassische PID-Struktur auf beziehungsweise ist der Kontroller als solchen programmiert. Auch die Verwendung eines Zustandsreglers ist möglich.

Bevorzugt ist ein Kraftmesselement vorhanden, welches die rechtwinklig zu der mittels des Kraftmessorgans erfasste Kraft auf die Kontaktrolle wirkende Kraftkomponente erfasst. Es ist auch möglich, dass das Kraftmessorgan auch diese Kraftkomponente misst.

Aus den Daten des Kraftmessorgans beziehungsweise Kraftmesselements ist eine den Verschleiss des Schleifbandes charakterisierende Verschleissinformation ermittelbar. Dies ermöglicht die Berücksichtigung des jeweils aktuellen Zustands des Schleifbandes bei der Steuerung der Bandschleifvorrichtung. Vorzugsweise wird die Antriebsgeschwindigkeit des Schleifbandes und/oder die Andruckkraft, mit welcher das Werkstück jeweils am Schleifband anliegt, auf Basis der Verschleissinformation auf wenigstens annähernd konstanten Spanabtrag geregelt.

Es wird mittels der Verschleissinformation auch eine Zustandsabhängige Wartung und ein zustandsabhängiger Schleifbandwechsel ermöglicht.

Bevorzugt wird aus den Signalen des Kraftmessorgans, des Kraftmesselement, des Positionssensors beziehungsweise der Prozesszeit zu den jeweiligen Berührungssituationen des Werkstücks mit dem Schleifband - d.h. in den Berührungs-Abschnitten beziehungsweise Berührungs-Zeitabschnitten - ein Frequenzspektrum ermittelt. Aus der FourierTransformation beziehungsweise "fast FourierTransformation" lassen sich Informationen zur Prozessdynamik ermitteln; so beispielsweise zu den Kontaktsituationen, zu Ratterschwingungen, zur Schleifleistung, zum Zustand der Bandschleifvorrichtung, wie das Flattern des Schleifbandes, die Drehzahl, Unwucht der Rollen, usw.

Bevorzugt ist die Bewegungsbahn des Handhabungsgeräts derart ausgelegt, dass die Berührung zwischen dem Probe-Werkstück beziehungsweise den Werkstücken und dem Schleifband immer im Bereich der Umschlingung des Schleifbandes um die Kontaktrolle erfolgt. Es ist jedoch auch denkbar, die Bewegungsbahn derart festzulegen, dass die Berührung ausserhalb des Umschlingungsbereiches stattfindet.

Bevorzugt sind die Antriebsrolle und die allfällige Umlenkrolle für das Schleifband ortsfest am Maschinengestell gelagert. In andern Worten weist die Bandschleifmaschine bevorzugt keinen bewegbaren Arbeitskopf auf.

Das Handhabungsgerät beziehungsweise der Industrieroboter weist bevorzugt sechs Freiheitsgrade zum Bewegen der Werkstücke auf.

Die Erfindung wird anhand von Ausführungsbeispielen in der Zeichnung näher erläutert. Es zeigen rein schematisch:
- Figur 1: ein durch einen Industrieroboter gebildetes Handhabungsgerät und einen Teil einer Bandschleifmaschine mit einer mittels eines linearen Stellantriebs linear bewegbarer Kontaktrolle und einer Kraftmessdose zum Messen der Kraft zwischen der Kontaktrolle und dem Stellantrieb;
- Figur 2: den Industrieroboter, dessen Endeffektor ein zu schleifendes Werkzeug hält, sowie einen Teil der Bandschleifmaschine mit dem Stellantrieb, einem zwischen diesem und der Kontaktrolle angeordneten, durch einen Messstreifen (DMS) gebildeten Kraftsensor, einem schematisch angedeuteten Positionssensor und einem schematisch angedeuteten Regler;
- Figur 3: den Industrieroboter und die Bandschleifmaschine, wobei der Stellantrieb, der Kraftsensor und der Positionssensor der Bandschleifmaschine zugeordnet sind;
- Figur 4: den Industrieroboter und die Bandschleifmaschine, wobei der Kraftsensor sowie der Positionssensor der Bandschleifmaschine und der Stellantrieb dem Handhabungsgerät zugeordnet sind;
- Figur 5: die Bandschleifmaschine und den Industrieroboter, wobei der Kraftsensor dem Handhabungsgerät und der Stellantrieb sowie der Positionssensor der Bandschleifmaschine zugeordnet sind;
- Figur 6: die Bandschleifmaschine und das Handhabungsgerät, wobei die Kontaktrolle der Bandschleifmaschine stationär gelagert ist und der Kraftsensor, der Positionssensor und der Stellantrieb dem Handhabungsgerät zugeordnet sind;
- Figur 7: eine schematische Darstellung des geschlossenen Regelkreises;
- Figur 8: ein Ablaufdiagramm des Verfahrens zum Betreiben der Bandschleifvorrichtung; und
- Figur 9: eine Beispiel aus einem Weg- und Kraftdiagramm in Funktion der Zeit beim Schleifen eines Probe-Werkstücks.

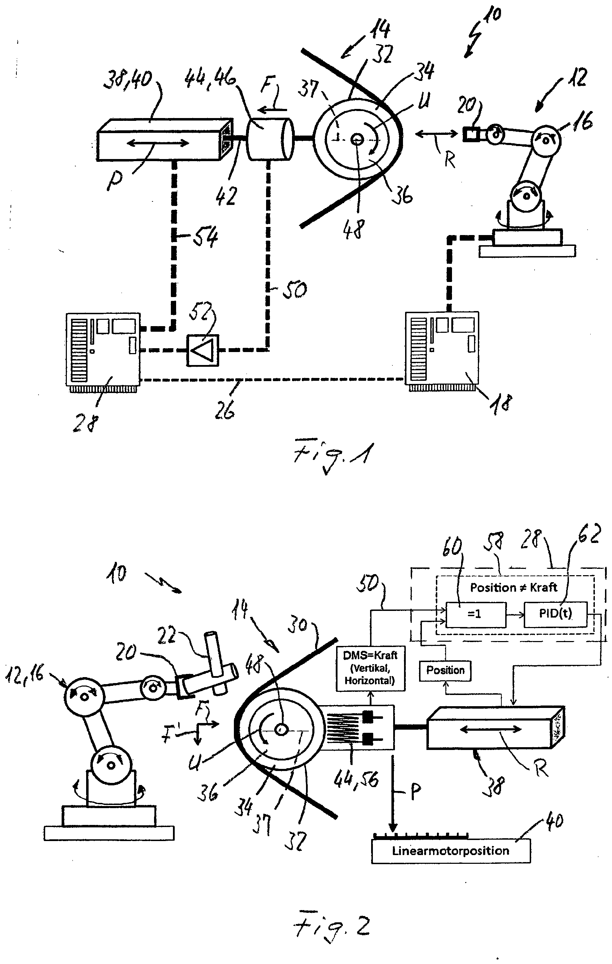

Figur 1 zeigt eine Bandschleifvorrichtung 10 mit einem Handhabungsgerät 12 und einer Bandschleifmaschine 14, wobei Letztere nur teilweise dargestellt ist.

Das Handhabungsgerät 12 ist in allen gezeigten Ausführungsbeispielen durch einen Industrieroboter 16 gebildet.

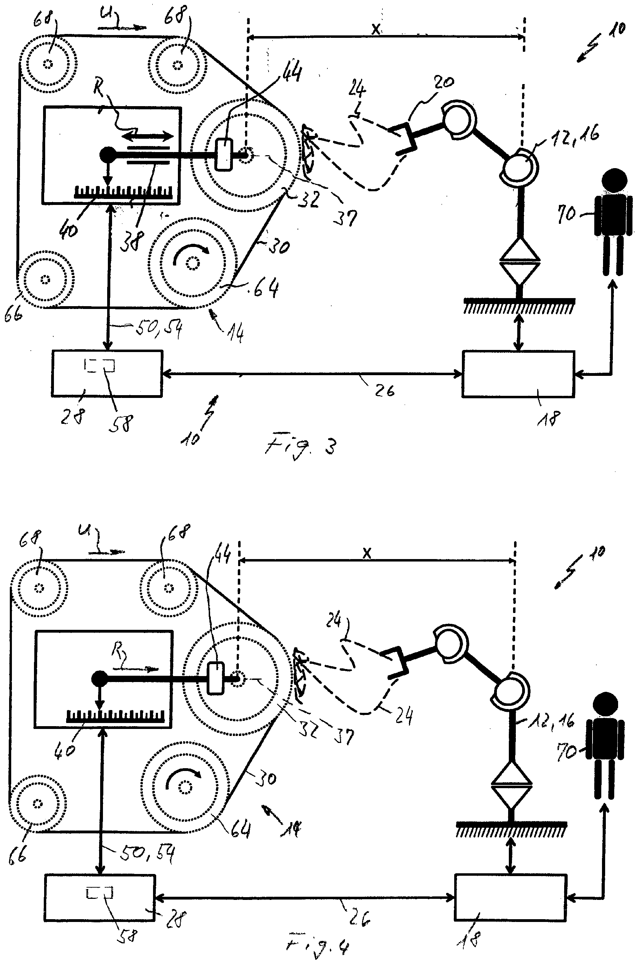

Dem Industrieroboter 16 ist eine programmierbare Gerätesteuerung 18, beispielsweise eine speicherprogrammierbare Steuerung SPS, zugeordnet, welche einerseits den Industrieroboter 16 derart ansteuert, dass dessen Endeffektor 20 das von ihm gehaltene Werkstück 22 (siehe Figur 2) entlang einer vorbestimmten, programmierten Bewegungsbahn 24 (siehe Figuren 3 bis 6) bewegt und andererseits über eine Leitung 26 ein Synchronisationssignal an einen der Bandschleifmaschine 14 zugeordneten Kontroller 28 abgibt.

Im gezeigten Ausführungsbeispiel handelt es sich beim Industrieroboter 16 um einen Zweiarmroboter mit 6 Freiheitsgraden.

Das Handhabungsgerät 12 kann auch durch einen programmgesteuerten Kreuztisch, Drehtisch, Kopiertisch u.d.gl. gebildet sein.

Von der Bandschleifmaschine 14 ist in Figur 1 ein Abschnitt eines in sich geschlossenen Schleifbands 30 gezeigt, welches um eine Kontaktrolle 32 geführt ist. Der Pfeil U gibt die Drehrichtung der Kontaktrolle und somit die Laufrichtung des Schleifbandes 30 an. Die Kontaktrolle 32 weist ein elastisches Laufpolster 34 auf einem unelastischen Rollenkern 36 auf.

Die Kontaktrolle 32 ist an einem nicht gezeigten Maschinengestell in Richtung des Pfeiles R, hier entlang einer linearen Bahn 37, hin und her verschiebbar gelagert.

Es ist beispielsweise auch möglich, die Kontaktrolle an einem ortsfest gelagert Hebel oder einer Wippe zu lagern, so dass die Achse der Kontaktrolle entlang eines Abschnitts einer Kreisbogenbahn verschiebbar ist.

Der Bandschleifmaschine 14 ist ein Stellantrieb 38, im gezeigten Ausführungsbeispiel in Form eines elektrodynamischen Linearmotors mit integriertem Positionssensor 40, zugeordnet. Der Stellantrieb 38 ist ebenfalls am Maschinengestell befestigt.

An einer Antriebstange 42 des Stellantriebs 38 ist ein Kraftmessorgan 43 bildender Kraftsensor 44 in Form einer Kraftmessdose 46 befestigt, welche andererseits mit der Welle 48 der Kontaktrolle 32 verbunden ist.

Im gezeigten Ausführungsbeispiel liegen die Achsen der Antriebstange 42 und Kraftmessdose 46 in einer in Richtung des Pfeiles R verlaufenden Geraden, welche die Achse der Welle 48 schneidet, somit in Flucht mit der Bahn 37.

Der Kraftmesssensor 44 beziehungsweise die Kraftmessdose 46 übermittelt die kontinuierlich gemessenen, der Kraft F entsprechenden Kraftsignale über eine Kraftsensorleitung 50 an einen Messverstärker 52, welcher das verstärkte Kraftsensorsignal an den Kontroller 28 weiterleitet.

Der Stellantrieb 38 ist über eine elektrische Leitung 54 ebenfalls mit dem Kontroller 32 verbunden, wobei über diese Leitung 54 einerseits vom Kontroller 28 Steuersignale an den Stellantrieb 38 und andererseits vom Positionssensor 40 die kontinuierlich ermittelten Positionssignale entsprechend der Position P an den Kontroller 28 übermittelt werden.

Mittels des Stellantriebs 38 ist die Kontaktrolle 32 in Richtung des Doppelpfeiles R hin und her verschiebbar und der Kraftsensor 44 misst kontinuierlich die Kraft, welche in linearer Richtung zwischen der Kontaktrolle 32 und dem Stellantrieb 38 wirkt.

Die in Figur 2 dargestellte Ausführungsform der Bandschleifvorrichtung 10 entspricht jener gemäss Figur 1, wobei die Kraftmessdose 46 durch eine Dehnmessstreifenanordnung 56 (DMS) ersetzt ist, welche sowohl die in Richtung des Doppelpfeiles R zwischen der Kontaktrolle 32 und im Stellantrieb 38 wirkende Kraft F als auch die rechtwinklig dazu verlaufende Kraftkomponente F' kontinuierlich misst. Die Kraftsensorleitung ist ebenfalls mit 50 bezeichnet.

Der ansonsten in den Stellantrieb 38 integrierte Positionssensor 40 ist aus diesem herausgelöst schematisch dargestellt; dessen Positionssignale werden über die elektrische Leitung 54 dem Kontroller 28 zugeführt. Über diese Leitung werden auch die Steuerbefehle vom Kontroller 28 an den Stellantrieb 38 übermittelt.

Der Kontroller 28 weist eine Regeleinheit 58 auf beziehungsweise er ist als solche programmiert.

Die Signale des Positionssensors 40 und des Kraftsensors 44 werden beim Schleifen eines Probe-Werkstücks einem Speicher des Kontrollers 28 und beim Schleifen der Werkstücke 22 der Regeleinheit 58 und vorzugsweise auch dem Speicher zugeführt. Die Regeleinheit leitet über ein Schaltelement 60, in Abhängigkeit von der Berührungssituation des Werkstücks 22 mit dem Schleifband 30, entweder das Kraftsignal oder das Positionssignal an einen Regler 62, im vorliegenden Fall einen PID Regler, als Ist-Wert weiter. Die vom Regler 62 erzeugten Steuersignale werden dem Stellantrieb 38 zugeleitet; dies trifft auch für den Kontroller 28 bei der Ausführungsform gemäss Figur 1 zu.

Wie dies den Figuren 3 bis 6 entnehmbar ist, verläuft das Schleifband 30 in Umlaufrichtung U gesehen stromabwärts der Kontaktrolle 32 um eine Antriebsrolle 64, danach um eine Spannrolle 66 und schlussendlich um zwei Umlenkrollen 68 zurück zur Kontaktrolle 32.

In diesen Figuren ist der Industrieroboter 16 mit dessen Endeffektor 20 nur noch schematisch angedeutet. Beim Industrieroboter kann es sich beispielsweise um den Typ KUKA KR 30-2 handeln.

Figur 3 entspricht schematisch den Ausführungsformen gemäss den Figuren 1 und 2, bei welchen der Stellantrieb 38, der Positionssensor 40 und der Kraftsensor 44 der Bandschleifmaschine 14 zugeordnet sind. Entsprechend sind der Kraftsensor 44 über die Kraftsensorleitung 50 sowie der Positionssensor 40 und der Stellantrieb 38 über die Leitung 54 mit dem Kontroller 32 verbunden.

Wie im Zusammenhang mit den Figuren 1 und 2 erläutert, wird der Industrieroboter 16 über die Gerätesteuerung 18 gesteuert. Über die Leitung 26 werden auch hier Synchronisationssignale von der Gerätesteuerung 18 an den Kontroller 28 übermittelt.

Schematisch ist eine Bedienungsperson 70 angedeutet, welche, wie mit dem Pfeil angedeutet, über die Gerätesteuerung 18 in bekannter Art und Weise die Bewegungsbahn 24 zum Schleifen der Werkstücke 22 programmieren kann.

Im Zusammenhang mit den Figuren 4 bis 6 werden im Folgenden nur noch die Unterschiede zur Ausführungsform gemäss den Figuren 1 bis 3 erläutert. Für einander entsprechende Teile werden dieselben Bezugszeichen verwendet.

Bei der in der Figur 4 gezeigten Ausführungsform sind der Kraftsensor 44 sowie der Positionssensor 40 der Bandschleifmaschine 14 zugeordnet und diese sind ebenfalls über die Kraftsensorleitung 50 sowie die elektrische Leitung 54 mit dem Kontroller 28 verbunden. Der Stellantriebe 38 ist hier dem Industrieroboter 16, zugeordnet. Der Kontroller 28 erzeugt analog, wie weiter oben beschrieben, die Steuersignale für den Stellantrieb 38, wobei diese nun der Gerätesteuerung 18 zugeführt werden. Die Gerätesteuerung 18 leitet diese Steuersignale an den Stellantrieb, beispielsweise beim Endeffektor 20 weiter oder setzt diese Steuersignale - als virtuellen Stellantrieb - in die entsprechende Bewegung des Industrieroboters 16 um, um die Bewegungsbahn 24 entsprechend zu korrigieren.

Der Positionssensor 40 und Kraftsensor 44 können in der Bandschleifmaschine 14, beispielsweise über eine Druckfeder, abgestützt sein, welche die Kontaktrolle 32 in Richtung R auf den Industrieroboter 16 zu mit einer Federkraft beaufschlagt.

Bei der Ausführungsform gemäss Figur 4 kann der Stellantrieb 38 somit in die Gerätesteuerung 18 des Industrieroboters 16 integriert sein.

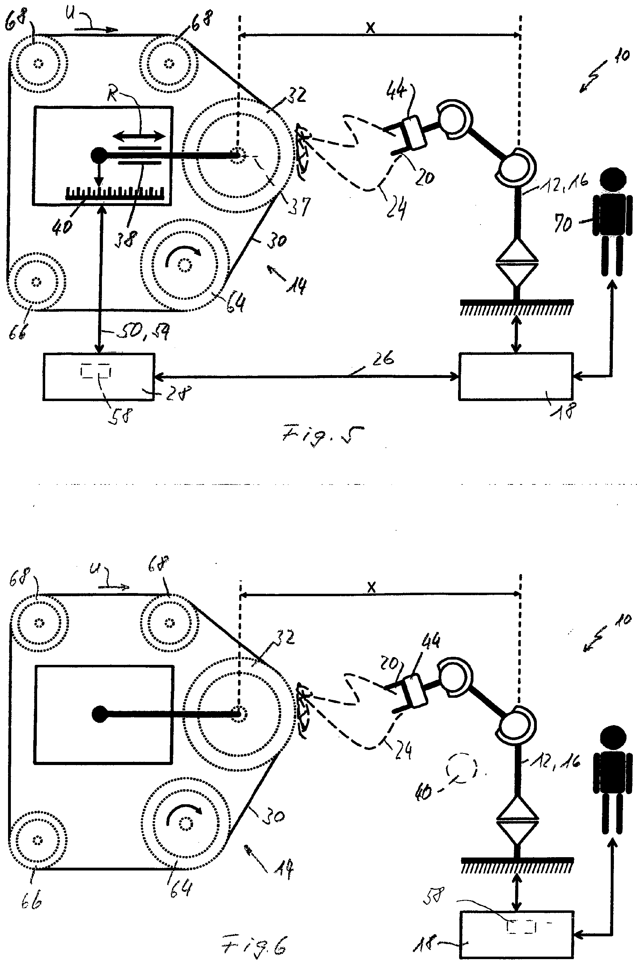

Bei der in der Figur 5 gezeigten Ausführungsform sind der Stellantrieb 38 und der Positionssensor 40 der Bandschleifmaschine 14 zugeordnet, auf gleiche Art und Weise wie dies im Zusammenhang mit den Figuren 1 bis 3 gezeigt und erläutert ist. Der einzige Unterschied besteht darin, dass der Stellantrieb 38 nun direkt, d.h. nicht über eine Kraftsensor 44, auf die Kontaktrolle 32 einwirkt. Der Kraftsensor 44 ist dem Industrieroboter 16 zugeordnet. Bevorzugt ist der Kraftsensor 44 in den Endeffektor 20 integriert. Die Messsignale des Kraftsensors 44 werden über die Gerätesteuerung 18 dem Kontroller 28 zugeführt, welcher wiederum die Regeleinheit 58 aufweist. Es ist auch hier möglich, dass die Gerätesteuerung 18 die Steuersignale - als virtuellen Stellantrieb - in die entsprechende Bewegung des Industrieroboters 16 umsetzt, um die Bewegungsbahn 24 entsprechend zu korrigieren.

Bei der in der Figur 6 gezeigten Ausführungsform ist die Kontaktrolle 32 der Bandschleifmaschine 44 ortsfest gelagert.

Auf gleiche Art und Weise wie im Zusammenhang mit der Figur 5 erläutert, ist der Kraftsensor 44 dem Industrieroboter 16 zugeordnet. Ein ebenfalls dem Industrieroboter 16 zugeordneter, schematisch angedeuteter Positionssensor 40 stellt kontinuierlich die Ist-Position P des Endeffektors 20 und somit des damit gehaltenen Werkstücks 22 fest und gibt entsprechende Positionssignale an die Gerätesteuerung 18 weiter. Bei dieser Ausführungsform ist die Regeleinheit 58 in die Gerätesteuerung 18 integriert, wobei ihr die Messsignale des Positionssensors 40 sowie des Kraftsensors 44 zugeführt werden und der Ausgang der Regeleinheit 58 der entsprechenden Korrektur der Steuerung des Industrieroboters 16 dient. Auch bei dieser Ausführungsform kann andererseits der Stellantriebe 38 am Industrieroboter 16, vorzugsweise an dessen Endeffektor 20 angeordnet sein.

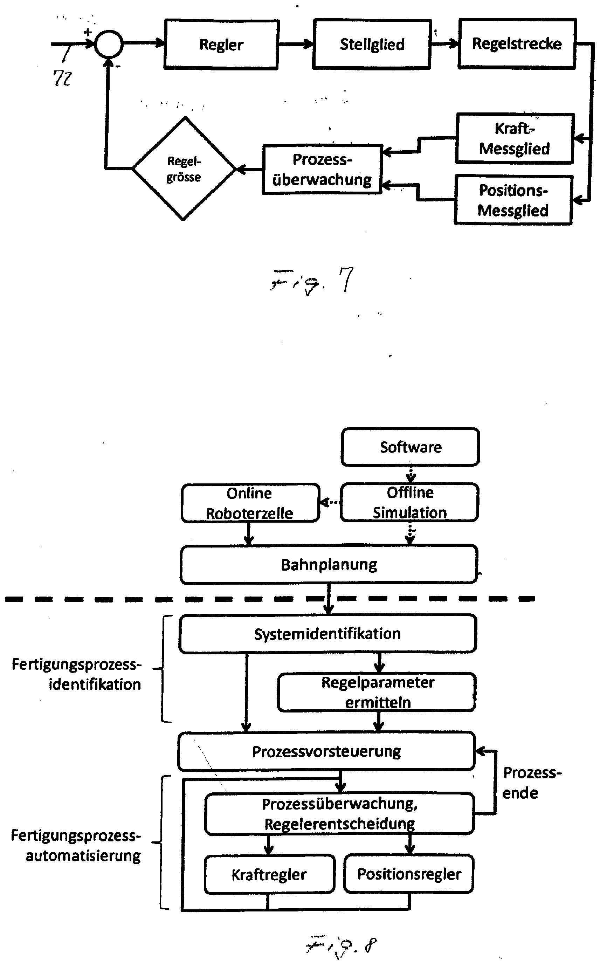

Dem Blockschaltbild gemäss Figur 7 ist entnehmbar, dass der Stellantrieb 38 mit den kontinuierlich gemessenen Grössen Kraft F (mittels des Kraftmessorgans 43 beziehungsweise des Kraftsensors 44 oder Kraftmessdose 46) und Position P (mittels des Positionssensors 40) in den Regelkreis integriert ist.

Wie dies weiter unten erläutert ist, werden dem Regelkreis als Führungsgrösse 72 entweder die gespeicherten Positionsdaten oder die gespeicherten Kraftdaten zugeführt, welche beim Schleifen des Probe-Werkstücks 22 gemessen und gespeichert worden sind. Für die negative Rückkopplung werden, beim dem Schleifen des Probe-Werkstückes folgenden Schleifen der Werkstücke 22, kontinuierlich die auf das Kraftmessorgan 43 beziehungsweise den Kraftsensor 44 oder die Kraftmessdose 46 wirkende Kraft F sowie mittels des Positionssensors 40 die Position P des Stellantriebs 38 erfasst und mittels der Prozessüberwachung wird je nachdem, ob kraftgeregelt oder positionsgeregelt wird, der entsprechende Ist-Wert als Regelgrösse zurückgeführt. Die Regelabweichung wird dem Regler 62 zugeführt, dessen ausgangsseitige Stellgrösse dem Stellantrieb 38 und der übrigen Regelstrecke zugeführt wird.

Vorzugsweise werden auch beim Schleifen der Werkstücke die gemessenen Kraft- und Positionsdaten zusammen mit der Zeitinformation im Speicher des Kontrollers 28 gespeichert.

Figur 8 zeigt ein Flussdiagramm, wobei der den vorliegenden Erfindungsgegenstand betreffende Teil unterhalb der dicken gestrichelten Linie angegeben ist. Die Schritte oberhalb dieser Linie betreffen Verfahrensschritte, welche als Voraussetzung für das Verfahren vorher stattfinden.

So geht das vorliegende Verfahren davon aus, dass die Bewegungsbahn 24 zum Schleifen der Werkstücke 22 durch die Bahnplanung erfolgt ist. Es ist möglich, dass die Bahnplanung und die damit verbundene Programmierung der Bewegungsbahn 24 online an der Bandschleifvorrichtung 10 erfolgt, indem eine Bedienungsperson 70 iterativ die Bewegungsbahn 24 mittels der Gerätesteuerung 18 festlegt, wie dies allgemein bekannt ist. Die Bahnplanung kann softwareunterstützt durch eine offline Simulation erfolgen.

Nachdem die Bewegungsbahn 24 zum Schleifen der Werkstücke 22 festgelegt und in der Gerätesteuerung 18 gespeichert ist, wird ein (vorzugsweise einziges) Muster-Werkstück 22 mittels des Handhabungsgeräts 12, im vorliegenden Fall des Industrieroboters - 16, entlang der gespeicherten Bewegungsbahn 24 bewegt.

Beim Schleifen des Probe-Werkstücks 22 wird der Stellantrieb 38 in Abhängigkeit von der Kraft, mit welcher das Werkstück 22 am Schleifband 30 anliegt, zurückdrängbar angesteuert. Dies kann beispielsweise entsprechend einer einfachen Federcharakteristik erfolgen.

Zu Beginn des Prozesses gibt die Gerätesteuerung 18 ein Synchronisationssignal über die Leitung 26 an den Kontroller 28 ab. Beim Durchlaufen der Bewegungsbahn 24 werden im Kontroller 28 kontinuierlich sowohl die vom Positionssensor 40 als auch vom Kraftmessorgan 43 beziehungsweise dem Kraftsensor 44 oder der Kraftmesssonde 46 erfassten Positions- und Kraftdaten in Abhängigkeit von der (Prozess-)Zeit und somit auch in Abhängigkeit vom aktuellen Ort der Bewegungsbahn 24 gespeichert.

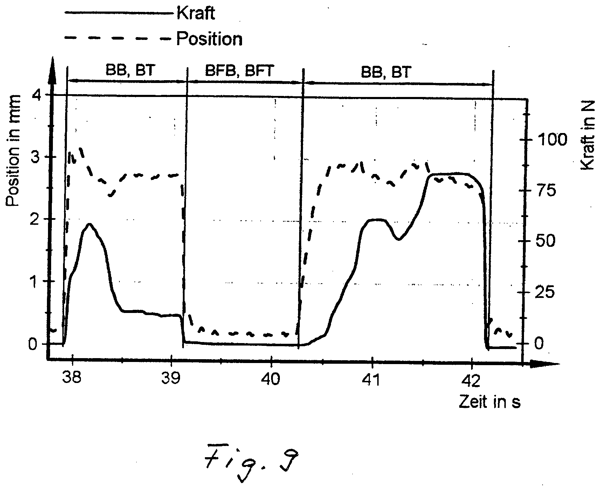

Figur 9 zeigt schematisch die zeit- und somit bezüglich der Bewegungsbahn 24 wegabhängigen Kraft- und Positionsdaten für einen Teil der Bewegungsbahn 24 beim Schleifen des Probe-Werkstücks 22.

Ist eine Berührung zwischen dem Probe-Werkstück 22 und dem Schleifband 30 gegeben, steigt entsprechend das Kraftsignal als auch das Positionssignal des Stellantriebs 38 an. Ist der entsprechende Schleifabschnitt am Probe-Werkstück 22 beendet, hebt infolge der programmierten Bewegungsbahn 24 das Probe-Werkstück 22 vom Schleifband 30 ab, was dadurch erkennbar ist, dass das Positionssignal auf null und das Kraftsignal auf einen tiefen Wert abfallen. Kommt zum Schleifen eines weiteren Schleifabschnitts das Probe-Werkstück 22 wiederum am Schleifband 30 zur Anlage, steigen entsprechend die Kraft- und Positionssignale wieder an bis zum nächsten Abheben des Probe-Werkstücks 22 vom Schleifband 30.

Aus den erfassten Kraftdaten und Positionsdaten lassen sich nach dem Schleifen des Probe-Werkstücks 22 auf einfache Art und Weise die Berührungs-Abschnitte BB der Bewegungsbahn 24 und die entsprechenden Berührungs-Zeitabschnitte BT, in welchen das Schleifband 30 das Werkstück 22 bearbeitet hat, festlegen. Auf genau gleiche Art und Weise lassen sich die Berührungsfrei-Abschnitte BFB der Bewegungsbahn 24 und die entsprechenden Berührungsfrei-Zeitabschnitte BFT, in welchen das Probe-Werkstück 22 vom Schleifband 30 abgehoben war, festlegen und im Speicher des Kontrollers 28 mit den entsprechenden Ort- beziehungsweise (Prozess-)Zeitinformation speichern. Dies fällt im Flussdiagramm der Figur 9 unter den Schritt "Systemidentifikation".

Bevorzugt werden mittels dieser Daten, und bevorzugt unter Berücksichtigung der Nachgiebigkeit des Industrieroboters 16 in Abschnitten der Bewegungsbahn 24, die Regelparameter des Reglers, hier beispielsweise des Standard PID1-Reglers festgelegt und ebenfalls dem Ort- beziehungsweise der (Prozess-)Zeitinformation zugeordnet gespeichert.

Im Schritt "Prozessvorsteuerung" werden die oben erwähnten, beim Schleifen des Probewerkstücks 22 erfassten und daraus ermittelten Daten sowie gegebenenfalls die Regelparameter vom Speicher in den Arbeitsspeicher des Kontrollers 28 geladen.

Anschliessend kann das serienmässige Schleifen der - mit dem Probe-Werkstück artgleichen - Werkstücke 22 beginnen, indem jedes dieser Werkstücke 22 mittels des Industrieroboters 16 erfasst und dann entlang der programmierten Bewegungsbahn 24 bewegt wird.

Zu Beginn jedes Prozesses gibt die Gerätesteuerung 18 ein Synchronisationssignal über die Leitung 26 an den Kontroller 28 ab, sodass dieser synchron mit dem Durchlaufen der Bewegungsbahn 24 beziehungsweise der entsprechenden (Prozess-)Zeit die gespeicherten Daten der Regeleinheit 58 zuführt.

Liegt dabei ein Berührungs-Abschnitt BB beziehungsweise Berührungs-Zeitabschnitt BT vor, erfolgt die Regelung des Stellantriebs 38 kraftabhängig. Liegt jedoch dabei ein Berührungsfrei-Abschnitt BFB beziehungsweise Berührungsfrei-Zeitabschnitt BFT vor, erfolgt die Regelung des Stellantriebs 38 positionsabhängig.

Der Vollständigkeit halber sei erwähnt, dass in Zusammenhang mit der Figurenbeschreibung immer auf den Industrieroboter 16 Bezug genommen worden ist. Selbstverständlich kann entsprechend eine andere Art eines Handhabungsgeräts 12 verwendet werden.

Weiter ist das Verfahren anhand der Ausführungsformen gemäss den Figuren 1, 2 und 3 beschrieben. Es bleibt grundsätzlich unverändert bei der Anwendung an den Ausführungsformen gemäss den Figuren 4 bis 6.

Aus den beim Schleifen der Werkstücke 22 erfassten Daten des Kraftmessorgans 43 beziehungsweise Kraftmesselements 56 kann eine den Verschleiss des Schleifbandes 30 charakterisierende Verschleissinformation ermittelt werden. Darauf gestützt kann beispielsweise die Antriebsgeschwindigkeit des Schleifbandes 30 und/oder die Andruckkraft F, mit welcher das Werkstück 22 jeweils am Schleifband 30 anliegt auf wenigstens annähernd konstanten Spanabtrag geregelt werden.

Aus den sowohl beim Schleifen des Probe-Werkstücks 22 als auch dem nachfolgenden (Serie-)Schleifen von Werkstücken gemessenen Daten des Kraftmessorgans 43 und/oder Positionssensors 40 und/oder der Prozesszeit und/oder gegebenenfalls des Kraftmesselements 56 können Frequenzspektren zu den jeweiligen Berührungsabschnitten BB beziehungsweise Berührungs-Zeitabschnitten BT ermittelt wird. Diesbezüglich wird auf die Offenbarung in der Einleitung verwiesen.

## Patentansprüche

1. Verfahren zum Betreiben einer Bandschleifvorrichtung (10) mit einer ein wenigstens um eine Kontaktrolle (32) und eine Antriebsrolle (64) herumgeführtes, in sich geschlossenes Schleifband (30) aufweisenden Bandschleifmaschine (14), einem programmgesteuerten Handhabungsgerät (12), welches das zu schleifende Werkstück (22) mittels eines Endeffektors (20) hält und zum Bandschleifen entlang einer vorbestimmten, programmierten Bewegungsbahn (24) bewegt, einem Kraftmessorgan (43) zum Messen der Kraft (F), mit welcher das Werkstück (22) am Schleifband (30) anliegt, einem Stellantrieb (38) zum in Richtung (R) aufeinander zu und voneinander weg Bewegen der Kontaktrolle (32) und des Endeffektors (20), sowie einem Positionssensor (40) zum Erfassen der Position (P) des Stellantriebs (38),
**dadurch gekennzeichnet, dass**
nach erfolgter Programmierung der Bewegungsbahn (24), ein Probe-Werkstück (22) - mit zurück drängbarem Stellantrieb (38) - geschliffen und dabei kontinuierlich die Kraft (F) und die Position (P) des Stellantriebs (38) mittels des Kraftmessorgans (43) und des Positionssensors (40) erfasst sowie die entsprechenden Daten gespeichert werden, aus diesen Daten die Berührungs-Abschnitte (BB) der Bewegungsbahn (24), in welchen das Probe-Werkstück (22) am Schleifband (30) zum Schleifen anliegt, und Berührungsfrei-Abschnitte (BFB) der Bewegungsbahn (24), in welchen das Werkstück (22) und Schleifband (30) relativ zu einander berührungsfrei sind, ermittelt werden, und dann zum Schleifen der Werkstücke (22) der Stellantrieb (38) mittels eines Reglers (62) mit den gespeicherten Daten als Führungsgröße (72) in den Berührungs-Abschnitten (BB) kraftgeregelt und in den Berührungsfrei-Abschnitten (BFB) positionsgeregelt wird.

2. Verfahren nach Anspruch 1, **dadurch gekennzeichnet, dass** die Daten zusammen mit einer Zeitinformation gespeichert werden, aus den Daten und der Zeitinformation die den Berührungsabschnitten (BB) entsprechenden Berührungs-Zeitabschnitte (BT) und die den Berührungsfrei-Abschnitten (BFB) so entsprechenden Berührungsfrei-Zeitabschnitte (BFT) bestimmt werden, und dann zum Schleifen der Werkstücke (22) der Stellantrieb (38) in den Berührungs-Zeitabschnitten (BT) kraftgeregelt und in den Berührungsfrei-Zeitabschnitten (BFT) positionsgeregelt wird.

3. Verfahren nach Anspruch 1 oder 2, **dadurch gekennzeichnet, dass** der Stellantrieb (38) mit der entlang einer Bahn (37) bewegbaren Kontaktrolle (32) zusammenwirkt und die von der Kontaktrolle (32) auf den Stellantrieb (38) ausgeübte Kraft (K) kontinuierlich mittels des Kraftmessorgan (43) erfasst wird.

4. Verfahren nach einem der Ansprüche 1 bis 3, **dadurch gekennzeichnet, dass** das Handhabungsgerät (12), vorzugsweise ein Industrieroboter (16), mittels einer programmierbaren Gerätesteuerung (18) zum Bewegen des Probe-Werkstücks und der Werkstücke (22) entlang der Bewegungsbahn (24) gesteuert wird, der Stellantrieb (38) mittels eines den Regler (62) bildenden, die Daten speichernden, programmierbaren Kontrollers (28) geregelt wird, und die Gerätesteuerung (18) an den Kontroller (28) gegebenenfalls die Zeitinformation bestimmende Synchronisationssignale abgibt, um die Daten synchron mit der Bewegung des Handhabungsgeräts (12) zu speichern beziehungsweise zur Regelung aus dem Speicher auszulesen.

5. Verfahren nach einem der Ansprüche 1 bis 4, **dadurch gekennzeichnet, dass** mittels der Daten für unterschiedliche Abschnitte der Bewegungsbahn jeweils eine Regelstreckenidentifikationen durchgeführt wird und zum Schleifen der Werkstücke (22) der Regler(62), beim Durchlaufen des jeweiligen Abschnitts, die diesem Abschnitt zugeordnete Regelstreckenidentifikation berücksichtigt.

6. Verfahren nach einem der Ansprüche bis 5, **dadurch gekennzeichnet, dass** mittels eines vorzugsweise rechtwinklig zum Kraftmessorgan (43) wirkenden Kraftmesselements (56) die entsprechende auf die Kontaktrolle (32) einwirkende Kraftkomponente (F') erfasst wird.

7. Verfahren nach einem der Ansprüche 1 bis 6, **dadurch gekennzeichnet, dass** aus den beim Schleifen der Werkstücke (22) erfassten Daten des Kraftmessorgans (43) beziehungsweise Kraftmesselements (56) eine den Verschleiß des Schleifbandes (30) charakterisierende Verschleißinformation ermittelt wird und vorzugsweise die Antriebsgeschwindigkeit des Schleifbandes (30) und/oder die Andruckkraft (F), mit welcher das Werkstück (22) jeweils am Schleifband (30) anliegt, auf Basis der Verschleißinformation auf wenigstens annähernd konstanten Spanabtrag geregelt wird.

8. Verfahren nach einem der Ansprüche 1 bis 7, **dadurch gekennzeichnet, dass** aus den Daten des Kraftmessorgans (43) und/oder Positionssensors (40) und/oder der Prozesszeit und/oder gegebenenfalls des Kraftmesselements (56) ein Frequenzspektrum zu den jeweiligen Berührungsabschnitten (BB) beziehungsweise Berührungs-Zeitabschnitten (BT) ermittelt wird:

## Claims

1. Method of operating a belt grinding apparatus (10) having a belt grinding machine (14) which has a closed grinding belt (30) that is guided at least around a contact roller (32) and a drive roller (64); having a program-controlled handling device (12) which, by means of an end effector (20), holds the workpiece (22) to be ground and, for belt grinding, moves along a predetermined, programmed path of movement (24); having a force-measuring unit (43) for measuring the force (F) with which the workpiece (22) makes contact with the grinding belt (30); having an adjusting drive (38) for moving the contact roller (32) and the end effector (20) towards and away from one another in direction (R); and having a position sensor (40) for detecting the position (P) of the adjusting drive (38),
**characterised in that**
once the programming of the path of movement (24) is complete, a test workpiece (22) is ground - with the adjusting drive (38) being capable of being forced back - and while so doing the force (F) and the position (P) of the adjusting drive (38) are continuously detected by means of the force-measuring unit (43) and the position sensor (40) and the corresponding data are stored, those data are used to ascertain the contact sections (BB) of the path of movement (24), in which the test workpiece (22) is in contact with the grinding belt (30) for grinding, and the contact-free sections (BFB) of the path of movement (24), in which the workpiece (22) and the grinding belt (30) are contact-free relative to one another, and then, for grinding the workpieces (22), the adjusting drive (38), by means of a regulator (62) using the stored data as guide variable (72), is force-regulated in the contact sections (BB) and position-regulated in the contact-free sections (BFB).

2. Method according to claim 1, **characterised in that** the data are stored together with time information, the data and the time information are used to determine the contact time-segments (BT) which correspond to the contact sections (BB) and the contact-free time-segments (BFT) which thus correspond to the contact-free sections (BFB) and then, for grinding the workpieces (22), the adjusting drive (38) is force-regulated in the contact time-segments (BT) and position-regulated in the contact-free time-segments (BFT).

3. Method according to claim 1 or 2, **characterised in that** the adjusting drive (38) co-operates with the contact roller (32), which is movable along a path (37), and the force (K) exerted on the adjusting drive (38) by the contact roller (32) is detected continuously by means of the force-measuring unit (43).

4. Method according to any one of claims 1 to 3, **characterised in that** the handling device (12), preferably an industrial robot (16), is controlled by means of a programmable device control means (18) to move the test workpiece and the workpieces (22) along the path of movement (24), the adjusting drive (38) is regulated by means of a programmable controller (28) that forms the regulator (62) and stores the data, and, where applicable, the device control means (18) emits synchronisation signals determining the time information to the controller (28) in order to store the data synchronously with the movement of the handling device (12) or, for the purpose of regulation, to read out the data from the memory.

5. Method according to any one of claims 1 to 4, **characterised in that**, by means of the data for different sections of the path of movement, in each case control path identification is carried out and, for grinding the workpieces (22), the regulator (62), on passage through the section in question, takes account of the control path identification associated with that section.

6. Method according to any one of claims 1 to 5, **characterised in that** by means of a force-measuring element (56), which preferably acts at a right angle to the force-measuring unit (43), the corresponding force component (F') acting on the contact roller (32) is detected.

7. Method according to any one of claims 1 to 6, **characterised in that** the data of the force-measuring unit (43) or force-measuring element (56) acquired during grinding of the workpieces (22) is used to determine wear information that characterises the wear to the grinding belt (30) and preferably the drive speed of the grinding belt (30) and/or the pressing force (F) with which each workpiece (22) makes contact with the grinding belt (30) is regulated on the basis of the wear information so that removal of material is at least approximately constant.

8. Method according to any one of claims 1 to 7, **characterised in that** the data of the force-measuring unit (43) and/or the position sensor (40) and/or the processing time and/or, where applicable, the force-measuring element (56) is used to ascertain a frequency spectrum relating to the respective contact sections (BB) or contact time-segments (BT).

## Revendications

1. Procédé d'actionnement d'un dispositif (10) de ponçage au ruban comprenant une ponceuse (14) à ruban munie d'un ruban abrasif (30) en boucle fermée, au moins guidé autour d'un rouleau de contact (32) et d'un rouleau d'entraînement (64) ; un appareil de manipulation (12) à commande programmée qui retient la pièce (22) à poncer, au moyen d'un effecteur (20), et la meut le long d'une trajectoire de mouvement (24) prédéterminée et programmée, en vue du ponçage au ruban ; un organe mesureur (43), conçu pour mesurer la force (F) avec laquelle ladite pièce (22) est en applique contre ledit ruban abrasif (30) ; un entraînement de réglage (38) destiné à imprimer, audit rouleau de contact (32) et audit effecteur (20), des mouvements dans une direction (R) les rapprochant et les éloignant l'un de l'autre ; ainsi qu'un capteur (40) conçu pour détecter l'emplacement (P) dudit entraînement de réglage (38),
**caractérisé par le fait**
**qu'**une éprouvette (22) est poncée à l'issue de la programmation de la trajectoire de mouvement (24) - l'entraînement de réglage (38) pouvant être repoussé -, avec détection continue de la force (F) et de l'emplacement (P) de l'entraînement de réglage (38), au moyen de l'organe (43) mesureur de forces et du capteur d'emplacements (40), ainsi qu'avec mémorisation continue des données correspondantes ; les zones de contact (BB) de la trajectoire de mouvement (24), dans lesquelles l'éprouvette (22) est en applique contre le ruban abrasif (30) en vue du ponçage, et des zones de non-contact (BFB) de ladite trajectoire de mouvement (24), dans lesquelles la pièce (22) et ledit ruban abrasif (30) sont exempts de contact mutuel, sont définies sur la base de ces données ; après quoi, en vue du ponçage des pièces (22), la force de l'entraînement de réglage (38) est régulée dans lesdites zones de contact (BB) et son emplacement est régulé dans lesdites zones de non-contact (BFB), au moyen d'un régulateur (62), à l'aide des données mémorisées représentant une grandeur directrice (72).

2. Procédé selon la revendication 1, **caractérisé par le fait que** les données sont mémorisées conjointement à une information temporelle ; les périodes de contact (BT) correspondant aux zones de contact (BB), et les périodes de non-contact (BFT) correspondant en conséquence aux zones de non-contact (BFB), sont déterminées sur la base desdites données et de ladite information temporelle ; après quoi, en vue du ponçage des pièces (22), la force de l'entraînement de réglage (38) est régulée durant lesdites périodes de contact (BT) et son emplacement est régulé durant lesdites périodes de non-contact (BFT).

3. Procédé selon la revendication 1 ou 2, **caractérisé par le fait que** l'entraînement de réglage (38) coopère avec le rouleau de contact (32) mobile le long d'une piste (37) et la force (K), appliquée audit entraînement de réglage (38) par ledit rouleau de contact (32), est détectée en continu au moyen de l'organe (43) mesureur de forces.

4. Procédé selon l'une des revendications 1 à 3, **caractérisé par le fait que** l'appareil de manipulation (12), de préférence un robot industriel (16), est piloté au moyen d'une commande programmable (18) en vue de mouvoir l'éprouvette et les pièces (22) le long de la trajectoire de mouvement (24) ; l'entraînement de réglage (38) est régulé au moyen d'une unité de commande (28) programmable, matérialisant le régulateur (62) et mémorisant les données ; et ladite commande (18) de l'appareil délivre le cas échéant, à ladite unité de commande (28), des signaux de synchronisation qui déterminent l'information temporelle, en vue de mémoriser lesdites données en synchronisme avec le mouvement dudit appareil de manipulation (12) ou, respectivement, de les extraire de la mémoire pour effectuer la régulation.

5. Procédé selon l'une des revendications 1 à 4, **caractérisé par le fait qu'**une identification de trajet de régulation est exécutée, à chaque fois, au moyen des données affectées à différentes zones de la trajectoire de mouvement ; et, lors du franchissement de la zone considérée, le régulateur (62) prend en compte l'identification de trajet de régulation associée à cette zone, en vue du ponçage des pièces (22).

6. Procédé selon l'une des revendications 1 à 5, **caractérisé par le fait que** la composante de force (F') correspondante, agissant sur le rouleau de contact (32), est détectée au moyen d'un élément (56) mesureur de forces qui opère, de préférence, perpendiculairement à l'organe (43) mesureur de forces.

7. Procédé selon l'une des revendications 1 à 6, **caractérisé par le fait qu'**une information d'usure, caractéristique de l'usure du ruban abrasif (30), est définie sur la base des données respectives de l'organe (43) mesureur de forces ou de l'élément (56) mesureur de forces, détectées au cours du ponçage des pièces (22) ; et de préférence, sur la base de ladite information d'usure, la vitesse d'entraînement dudit ruban abrasif (30), et/ou la pression de contact (F) par laquelle la pièce (22) est respectivement en applique contre ledit ruban abrasif (30), est (sont) régulée(s) dans le sens d'un enlèvement de copeaux au moins approximativement constant.

8. Procédé selon l'une des revendications 1 à 7, **caractérisé par le fait qu'**un spectre de fréquence, se rapportant respectivement aux zones de contact (BB) ou périodes de contact (BT) considérées, est défini sur la base des données de l'organe (43) mesureur de forces et/ou du capteur d'emplacements (40), et/ou de l'élément (56) mesureur de forces le cas échéant, et/ou du temps de processus.
